(19) Europäisches Patentamt / European Patent Office / Office européen des brevets

(11) **EP 4 170 743 A1**

(12) **EUROPEAN PATENT APPLICATION**

(43) Date of publication:
**26.04.2023 Bulletin 2023/17**

(21) Application number: **22202771.6**

(22) Date of filing: **20.10.2022**

(51) International Patent Classification (IPC):
*H01M 4/04* $^{(2006.01)}$    *H01M 4/139* $^{(2010.01)}$
*H01M 4/36* $^{(2006.01)}$    *H01M 4/62* $^{(2006.01)}$
*H01M 4/02* $^{(2006.01)}$

(52) Cooperative Patent Classification (CPC):
**H01M 4/0404; H01M 4/139; H01M 4/621;
H01M 4/622;** H01M 2004/021

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.10.2021 KR 20210140004**

(71) Applicant: **SK On Co., Ltd.
Seoul 03161 (KR)**

(72) Inventors:
• **KANG, Byung Chan
34124 Daejeon (KR)**
• **JO, Byoung Wook
34124 Daejeon (KR)**

(74) Representative: **Stolmár & Partner
Patentanwälte PartG mbB
Blumenstraße 17
80331 München (DE)**

(54) **ELECTRODE FOR A SECONDARY BATTERY WITH IMPROVED RAPID CHARGING PERFORMANCE, A METHOD OF MANUFACTURING THE SAME AND SECONDARY BATTERY COMPRISING THE SAME**

(57)     Provided is an electrode for a secondary battery including: a current collector; and an electrode active material layer located on at least one surface of the current collector, and including an electrode active material and a binder, in which the electrode active material layer includes A region and B region crossing in a direction from one side to the other side of the electrode active material layer in a width direction, the A region has a higher binder content than that of the B region, and the A region and B region have a continuous binder content gradient at a boundary of each region.

【FIG. 2A】

EP 4 170 743 A1

**Description**

**TECHNICAL FIELD**

The following disclosure relates to an electrode for a secondary battery with improved rapid charging performance, a method of manufacturing the same, and a secondary battery comprising the same.

**BACKGROUND**

Recently, in the case of large cells for high-energy EVs, since an electrode density is high, when the cells are charged with a high current density, there is a limit to a diffusion of Li ions into an anode. In this case, as the Li ions are precipitated on a surface of the anode, the cells deteriorate.

In order to improve the above problem, it is important to keep the density of the anode as low as possible or to lower the resistance of the surface and inside of the anode so that Li ions may be rapidly diffused into the anode.

In order to improve the resistance and rapid charging performance of the cell, a technology of lowering a binder content by developing a binder with high adhesion is being developed, but there are limitations to a type and content of binder with high adhesion. When the binder content is excessively lowered, a serious problem occurs in that an electrode mixture layer is detached from a current collector during a notching process or a charging/discharging process of the cell.

Therefore, a technology for efficiently distributing a binder inside an anode is being developed. In this case, the high binder content is formed at an interface of the current collector to suppress the detachment while lowering the binder content in the anode mixture layer and the surface, thereby improving the cell performance. To this end, a technology has been developed to mainly form anode slurry with a high binder content in a lower layer and to prepare anode slurry with a low binder content in an upper layer, as a dual layer. However, there is also a limit to realizing an ideal binder distribution due to the phenomenon in which binder particles move to the surface of the anode mixture layer during a general drying process.

Accordingly, the development of a lithium secondary battery with a low interfacial specific resistance between the current collector-electrode mixture layer and improved rapid charging performance is required.

**SUMMARY**

An embodiment of the present invention is directed to improving an interfacial adhesion between a current collector and an electrode active material layer by efficiently distributing a binder inside an electrode, prevent defects in process and appearance such as detachment of the electrode, and improve rapid charging performance.

In one general aspect, an electrode for a secondary battery includes: a current collector; and an electrode active material layer including an electrode active material and a binder located on at least one surface of the current collector, in which the electrode active material layer includes A region and B region crossing in a direction from one side to the other side of the electrode active material layer in a width direction, the A region has a higher binder content than that of the B region, and the A region and B region have a continuous binder content gradient at a boundary of each region.

The following relational expression 1 may be satisfied.

$$[\text{Relational Expression 1}]$$

$$1.0 < A/B < 2.5$$

In the relational expression 1, A may be a binder content in the A region, and B may be a binder content in the B region.

The electrode active material layer may have a ratio $B_L/B_H$ of a binder content $B_L$ at a point at which a thickness is 20% to a binder content $B_H$ at a point at which the thickness is 80% ranging from 1.5 to 3.5 in a direction from a surface of the current collector to a surface of the electrode based on a thickness direction.

The A region and B region of the electrode active material layer may each include first layers $a_1$ and $b_1$ and second layers $a_2$ and $b_2$ in the direction from the surface of the current collector to the surface of the electrode, based on the thickness direction, the first layers may have a higher binder content than that of the second layers, and the first layers and the second layers may have a continuous binder content at a boundary of each layer.

The following relational expression 2 may be satisfied.

[Relational Expression 2]

$$2.0 < A_1/A_2 < 3.0 \text{ and } 1.0 < B_1/B_2 < 2.5$$

In relational expression 2, $A_1$ and $A_2$ may each be the binder contents of the first layers and the second layers in the A region, and $B_1$ and $B_2$ may each be the binder contents of the first layers and the second layers in the B region.

The binder may include a styrene butadiene rubber (SBR)-based binder.

The electrode active material layer may include 0.1 to 2 wt% of the binder based on the total weight.

In another aspect, a method of manufacturing an electrode for a secondary battery includes: a) applying first and second electrode slurries to at least one surface of a current collector; and b) drying the applied first and second electrode slurries, in which in step a), the first and second electrode slurries are cross-applied, but the first and second electrode slurries are simultaneously applied, in a direction from one side to the other side of the current collector based on a width direction of the current collector, and the first electrode slurry has a binder content higher than that of the second electrode slurry.

In step a), the first electrode slurry may be applied from a location close to a surface of the current collector, and the second electrode slurry may be applied from a location far from the surface of the current collector, based on the thickness direction of the current collector.

The first and second electrode slurries may each independently include an electrode active material and a binder, and the first electrode slurry may include 1 to 5 wt% of the binder based on a solid content, and the second electrode slurry may include 0.1 to 1 wt% of the binder based on the solid content.

Step b) may be performed at a temperature of 50 to 200°C for 30 to 300 seconds.

In still another aspect, a secondary battery comprising the electrode is provided.

**BRIEF DESCRIPTION OF DRAWINGS**

FIGS. 1A and 1B are a schematic diagram (FIG. 1A) of a shape of a pattern coating core for applying electrode slurry of the present invention, and a schematic diagram (FIG. 1B) in which the pattern coating core is disposed on upper and lower portions.

FIGS. 2A and 2B are a schematic cross-sectional view (FIG. 2A) of an electrode manufactured in Comparative Example 1 and Example 1 in a thickness direction and a schematic diagram (FIG. 2B) illustrating an SBR (binder) distribution.

**DETAILED DESCRIPTION OF EMBODIMENTS**

Various advantages and features of the present disclosure and methods accomplishing them will become apparent from the following description of exemplary embodiments with reference to the accompanying drawings. However, the present disclosure is not limited to exemplary embodiments to be described below, but may be implemented in various different forms, these exemplary embodiments will be provided only in order to make the present disclosure complete and allow those skilled in the art to completely recognize the scope of the present disclosure, and the present disclosure will be defined by the scope of the claims. Hereinafter, exemplary embodiments of the present invention will be described in detail with reference to the accompanying drawings. Irrespective of the drawings, like reference numbers refer to like elements, and "and/or" includes each and one or more combinations of the recited items.

Unless defined otherwise, all terms (including technical and scientific terms) used in the present specification have the same meaning as meanings commonly understood by those skilled in the art to which the present invention pertains. Throughout the present specification, unless described to the contrary, "including" any component will be understood to imply the inclusion of other elements rather than the exclusion of other elements. In addition, a singular form includes a plural form unless specially described in the text.

When an element such as a layer, a film, a region, and a plate is "on" or "over" another component in the specification, it can be directly on the other element or intervening elements may be present therebetween.

An exemplary embodiment of the present invention provides an electrode for a secondary battery. The electrode includes: a current collector; and an electrode active material layer including an electrode active material and a binder located on at least one surface of the current collector, in which the electrode active material layer includes A region and B region crossing in a direction from one side to the other side of the electrode active material layer in a width direction, the A region has a higher binder content than that of the B region, and the A region and B region have a continuous binder content gradient at a boundary of each region.

In the electrode active material layer, the B region having a relatively low binder content in the width direction, may act as a Li-ion channel, making it easy to penetrate Li-ions into the electrode and increase an intercalation rate of ion conductivity due to lateral diffusion after the penetration. On the other hand, the A region having a relatively high binder content may improve an interfacial adhesion between the current collector and the electrode active material layer.

The electrode active material layer may include a structure in which a first A region, a first B region, a k-th A region, a k-th B region, and an n-th A region are cross-formed in a direction from one side to the other side of the electrode active material layer, based on the width direction. In this case, k may be an integer of 2 to n-1, and n may be an integer ranging from 3 to 10 or 3 to 7. In addition, the A region:B region may have a width direction length ratio of 1:3 to 3:1, 1:2 to 2:1, or 1:1.2 to 1.2:1, and may have substantially the same width direction length ratio.

The A region and B region have a continuous binder content gradient at a boundary of each region. Since the first and second electrode slurries forming the A region and B region are each applied at crossing positions simultaneously based on the width direction of the current collector, these slurries and the binders contained in each slurries are migrated into adjacent regions, and may have a continuous binder content gradient at the interface between the A region and the B region. In the present invention, the occurrence of cracks is suppressed at the interface between the A region and the B region, thereby increasing the durability of the electrode active material layer in the width direction.

The A region and B region may satisfy Relational Expression 1 below.

$$[\text{Relational Expression 1}]$$

$$1.0 < A/B < 2.5$$

In the relational expression 1, A is a binder content in the A region, and B is a binder content in the B region.

Specifically, the A region and B region may satisfy $1.5 < A/B < 2.5$ or $1.8 < A/B < 2.3$. In the above range, as a ratio (A/B) of the binder content increases, the penetration of Li-ions in the electrode may be facilitated, and the intercalation rate of ion conductivity may be increased due to lateral diffusion after the penetration, and the adhesion between the current collector and the electrode active material layer may be maintained at the same level as before.

The electrode active material layer may have a ratio $B_L/B_H$ of a binder content $B_L$ at a point at which a thickness is 20% to a binder content $B_H$ at a point at which the thickness is 80%, which ranges from 1.5 to 3.5 in a direction from a surface of the current collector to a surface of the electrode based on a thickness direction. Specifically, the electrode active material layer may satisfy $2 < B_L/B_H < 3$ or $2.2 < B_L/B_H < 2.8$. The present invention may improve defects in process/appearance such as interfacial detachment of an anode by controlling the binder distribution of the electrode active material layer in the thickness direction and width direction even if the total binder content of the electrode active material layer is the same as that of the related art, and improve rapid charging performance.

The electrode active material layer may each include first layers $a_1$ and $b_1$ and second layers $a_2$ and $b_2$ in the A region and B region in a direction from the surface of the current collector to the surface of the electrode, based on the thickness direction, and the first layers may have a binder content higher than that of the second layers, and the first layers and the second layers may have a continuous binder content at the boundary of each layer. In the present invention, even in a region (B region) where the binder distribution is relatively small, since the binder content is higher at the interface between the current collector and the electrode active material layer than on the surface of the electrode, the overall electrode active material layer may increase the interfacial adhesion with the current collector. At the same time, in the present invention, by adopting a novel method not applied in the related art, it is possible to implement a binder concentration gradient in the electrode in the width direction.

The first layers and the second layers of the electrode active material layer may satisfy Relational Expression 2 below.

$$[\text{Relational Expression 2}]$$

$$2.0 < A_1/A_2 < 3.0 \text{ and } 1.0 < B_1/B_2 < 2.5$$

In relational expression 2, $A_1$ and $A_2$ each are the binder contents of the first layers and the second layers in the A region, and $B_1$ and $B_2$ each are the binder contents of the first layers and the second layers in the B region.

Specifically, the electrode active material layer may satisfy $2 < A_1/A_2 < 3$ or $2.2 < A_1/A_2 < 2.8$, and may satisfy $1.5 < B_1/B_2 < 2.5$ or $1.8 < B_1/B_2 < 2.3$. Accordingly, the above-described effect may be further improved.

The binder may include a styrene-butadiene rubber (SBR)-based binder, for example, styrene-butyl rubber, a styrene-butyl acrylate copolymer, etc., but the present invention is not limited thereto. Accordingly, the electrode active material layer may include a styrene-butadiene rubber (SBR)-based binder.

The electrode active material layer may include 0.1 to 2 wt%, or 0.1 to 1.8 wt%, or 0.5 to 1.8 wt%, or 0.5 to 1.5 wt% of binder based on the total weight of the electrode active material layer. In the present invention, by distributing a plurality of binders at the interface between the current collector and the electrode active material layer and reducing the binder content toward the electrode surface, the total amount of the binder included in the entire active material layer may be significantly reduced. Accordingly, it is possible to improve the interfacial adhesion between the current collector-electrode active material layer and improve the fast charging performance.

In the case of using the SBR-based binder or the like, the viscosity of the electrode slurry is very low because the binder is mixed in the form of particles. In addition, since the size of the binder particles is composed of a small size of 200 nm or less, when the first and second electrode slurries are applied and dried at the same time, the migration of the binder particles into the upper electrode active material layer by osmotic pressure is facilitated, so a distinct upper/lower layer may not be formed at the interface between the upper/lower electrode active materials.

When the electrode is a cathode, the electrode active material may be used without limitation as long as it is a cathode active material typically used in secondary batteries. For example, the electrode active material may include any one cathode active material particle selected from the group consisting of $LiCoO_2$, $LiNiO_2$, $LiMn_2O_4$, $LiCoPO_4$, $LiFePO_4$, $LiNiMnCoO_2$, and $LiNi_{1-x-y-z}Co_xM^1_yM^2_zO_2$ ($M^1$ and $M^2$ are each independently any one selected from the group consisting of Al, Ni, Co, Fe, Mn, V, Cr, Ti, W, Ta, Mg, and Mo, x, y and z are each independently an atomic fraction of oxide composition elements and $0 \leq x < 0.5$, $0 \leq y < 0.5$, $0 \leq z < 0.5$, $x+y+z \leq 1$) or a mixture of two or more thereof.

When the electrode is an anode, the electrode active material may be used without limitation as long as it is an anode active material typically used in secondary batteries. Examples of the anode active material may include a carbon-based anode active material, a silicon-based anode active material, or a mixture thereof, but is not limited thereto. The carbon-based anode active material may be one or more selected from the group consisting of artificial graphite, natural graphite, and hard carbon. The silicon-based anode active material is Si, $SiO_x$ (0<x<2), an Si-Q alloy (wherein Q is an element selected from the group consisting of alkali metal, alkaline earth metal, group 13 element, group 14 element, group 15 element, group 16 element, transition metal, rare earth element, and combinations thereof, and not Si), a Si-carbon composite, or a mixture of at least one of them and $SiO_2$.

The electrode active material layer may further include a conductive material, a thickener, or a combination thereof, if necessary. The conductive material is used to impart conductivity to the electrode, and is not particularly limited as long as it is a conventional electronically conductive material that does not cause chemical change in the battery. For example, those selected from the group consisting of natural graphite, artificial graphite, carbon black, acetylene black, ketjen black, carbon fibers, carbon nanotubes, and combinations thereof may be used, but are not limited thereto. The thickener is used to make stable slurry by imparting viscosity. For example, as the thickener, one or more mixtures of a cellulose-based compound, specifically carboxymethyl cellulose, hydroxypropylmethyl cellulose, methyl cellulose, or alkali metal salts thereof may be used. As the alkali metal, Na, K, or Li may be used.

The electrode active material layer may include 90 wt% or more, preferably 90 to 99.9 wt%, 95 to 99.5 wt%, or 98 to 99.5 wt% of the electrode active material, include 0.1 to 2 wt%, 0.1 to 1.8 wt%, or 0.5 to 1.8 wt%, or 0.5 to 1.5 wt% of the binder, and include the conductive material and the thickener as the balance, based on the total weight. Even if the binder content of the electrode slurry is prepared to be low, the interfacial adhesion between the current collector and the electrode active material layer may be increased by the migration of binder particles when the binder suspension is dried, and the rapid charging performance may be improved by lowering the resistance of the electrode surface.

As the current collector, those selected from the group consisting of copper foil, nickel foil, stainless steel foil, titanium foil, nickel foam, copper foam, a polymer substrate coated with a conductive metal, and combinations thereof may be used, but are not limited thereto.

An exemplary embodiment of the present invention provides a method of manufacturing an electrode for a secondary battery. The method includes: a) applying first and second electrode slurries to at least one surface of a current collector; and b) drying the applied first and second electrode slurries.

In step a), the first and second electrode slurries are cross-applied in the direction from one side to the other side of the current collector based on the width direction of the current collector, but the first and second electrode slurries are simultaneously applied, and the first electrode slurry has a higher binder content than that of the second electrode slurry.

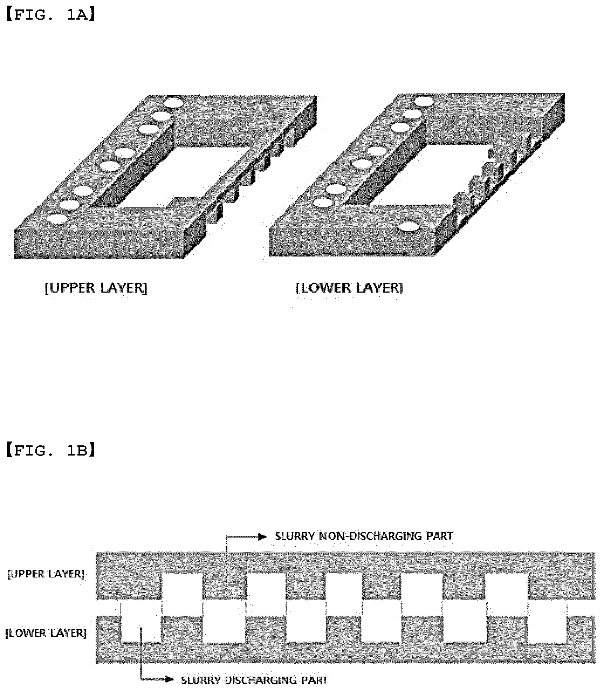

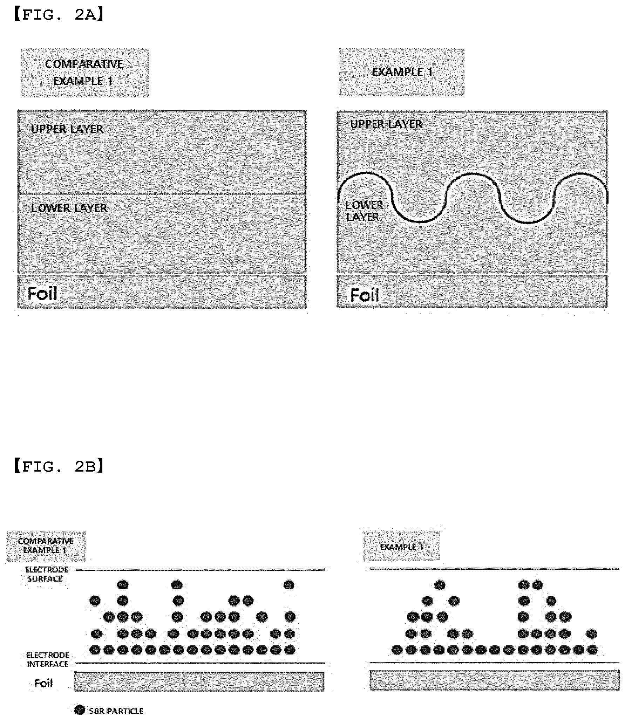

In step a), the first electrode slurry may be applied from a location close to a surface of the current collector, and the second electrode slurry may be applied from a location far from the surface of the current collector, based on the thickness direction of the current collector. FIGS. 1A and 1B are a schematic diagram (FIG. 1A) of a shape of a pattern coating core for applying electrode slurry of the present invention, and a schematic diagram (FIG. 1B) in which the pattern coating core is disposed on upper and lower portions. Referring to FIGS. 1A and 1B, a lower layer is formed by discharging first electrode slurry from a lower coating core using an upper/lower pattern coating core, and an upper layer is formed by discharging second electrode slurry from the upper coating core. Here, the discharged first and second electrode slurries were formed to cross the slurry discharging part and the non-slurry discharging part of the upper/lower patterned coating core in the width direction so as to form a pattern based on the electrode width direction. Accordingly, since the binder content is higher at the interface between the current collector and the electrode active material layer compared to the electrode surface, the interfacial adhesion with the current collector may be increased as a whole in the electrode active material layer and the B region, which has a relatively low binder content in the width direction, may act as a Li-ion channel, so the penetration of the Li-ions into the electrode may be facilitated and the intercalation rate of the ion conductivity may be increased due to lateral diffusion after the penetration. On the other hand, in the A region having a relatively high binder content, the interfacial adhesion between the current collector and the electrode active material layer may be improved. FIGS. 2A and 2B are a schematic cross-sectional view (FIG. 2A) of an electrode manufactured in Comparative Example 1 and Example 1 in a thickness direction and a schematic diagram (FIG. 2B) illustrating an SBR (binder) distribution. Referring to FIGS. 2A and 2B, since the upper/lower pattern coating cores are applied by discharging the first and second electrode slurries simultaneously (simultaneous dual coating), and has a continuous binder content gradient at the interface between the A region and the B region based on the width direction of the current collector, thereby suppressing the occurrence of cracks and increasing the durability of the electrode active material layer in the width direction. In addition, by having a continuous content gradient of the binder at the interface of the first layers a1 and b1 and the second layers $a_2$ and $b_2$ based on the thickness direction, the occurrence of cracks may also be suppressed.

The first and second electrode slurries may each independently include an electrode active material and a binder, and may further include a conductive material and a thickener if necessary.

The first electrode slurry contains 1.0 to 3.0 wt% or 1.5 to 2.8 wt% of a binder, 88 to 98 wt% or 92 to 96 wt% of an electrode active material, and, if necessary, a conductive material and a thickener as the balance, based on the total solid content.

The first electrode slurry may have a high viscosity such that the binder content is equal to or higher than that of the second electrode slurry.

The first electrode slurry contains 0 to 1.0 wt% or 0.4 to 0.6 wt% of a binder, 88 to 98 wt% or 92 to 96 wt% of an electrode active material, and, if necessary, a conductive material and a thickener as the balance, based on the total solid content.

The second electrode slurry may have a low viscosity such that the binder content is equal to or higher than that of the first electrode slurry.

The application may be performed at room temperature, and when assembling the coating die, the coating die may be assembled so that the patterns of the patterned coating cores cross. When the same amount of slurry is applied during dual coating, the effect may be maximized when the loading amount of the lower layer having a relatively high binder content is reduced and the loading amount of the upper layer having a relatively low binder content is high.

Step b) is a step of drying the applied first and second electrode slurries, and may be performed at a temperature of 50 to 200°C for 30 to 300 seconds. In the drying step, it is preferable to simultaneously dry the applied first and second electrode slurries.

In this case, the drying may be performed for 30 to 300 seconds, for example 30 seconds or more, 40 seconds or more, 50 seconds or more, 60 seconds or more, 70 seconds or more, 80 seconds or more, or 90 seconds or more, and 300 seconds or less, 280 seconds or less, 260 seconds or less, 240 seconds or less, 220 seconds or less, 200 seconds or less, 180 seconds or less, 160 seconds or less, 150 seconds or less, 140 seconds or less, 130 seconds or less, 120 seconds or less, or 110 seconds or less. In addition, the drying may be performed at a temperature of 50 to 200°C, for example, 50°C or more, 60°C or more, 70°C or more, 80°C or more or 90°C or more, and 200°C or less, 190°C or less, 180°C or less, 170°C or less, 160°C or less, 150°C or less, 140°C or less, 130°C or less, 120°C or less, or 110°C or less. When the drying temperature is too high or the drying time is very short, the interfacial adhesion may not be sufficiently realized due to excessive migration of the binder particles. In an exemplary embodiment, the step b) may be performed at a temperature of 80 to 130°C for 30 to 300 seconds.

During the drying of step b), some binder particles in the first electrode slurry are migrated into the second electrode slurry, so the problems of lowering the interface resistance and adhesion between the first and second layers of the electrode active material layer may be improved.

Then, by rolling the dried electrode under appropriate density, an electrode having an electrode active material layer formed on the current collector may be manufactured. In this case, the rolling conditions and rolling methods such as the rolling and the known rolling density may be applied, but the present invention is not limited thereto.

Another exemplary embodiment of the present invention provides a secondary battery including an electrode.

The electrode is the same as described above.

The separator is not particularly limited as long as it is a known separation membrane in the art. For example, it may be selected from glass fiber, polyester, polyethylene, polypropylene, polytetrafluoroethylene, or a combination thereof, and may be in the form of a non-woven fabric or a woven fabric, and may optionally be used in a single-layer or multi-layer structure.

The electrolyte includes a non-aqueous organic solvent and an electrolyte salt. The non-aqueous organic solvent is ethylene carbonate (EC), propylene carbonate (PC), dimethyl carbonate (DMC), diethyl carbonate (DEC), ethylmethyl carbonate (EMC), 1,2-dimethoxyethen (DME), $\gamma$-butyrolactone (BL), tetrahydrofuran (THF), 1,3-dioxolane (DOL), diethyl ether (DEE), methyl formate (MF), methyl propionate (MP), sulfolane (S), dimethyl sulfoxide (DMSO), acetonitrile (AN), or a mixture thereof, but is not limited thereto. The electrolyte salt is a material that is dissolved in the non-aqueous organic solvent, and thus, serves as a source of electrolytic metal ions in the battery to enable basic secondary battery operation, and promotes the movement of electrolytic metal ions between the cathode and the anode. As a non-limiting example, when the electrolytic metal is lithium, the electrolytic salt is $LiPF_6$, $LiBF_4$, LiTFSI, $LiSbF_6$, $LiAsF_6$, $LiClO_4$, $LiCF_3SO_3$, $Li(CF_3SO_2)_2N$, $LiC_4F_9SO_3$, $LiSbF_6$, $LiAlO_4$, $LiAlCl_4$, $LiN(C_xF_{2x+1}SO_2)(C_yF_{2y+1}SO_2)$ (however, x and y are natural numbers), LiCl, LiI, or a mixture thereof, but is not limited thereto. In addition, the electrolyte salt may use the known material in a concentration suitable for the purpose, and if necessary, may further include the known solvent or additive to improve charging/discharging characteristics, flame retardancy characteristics, and the like.

In the method for manufacturing a lithium secondary battery according to the present invention for achieving the above object, the battery may be manufactured by forming an electrode assembly by sequentially stacking a manufactured anode, a separator, and a cathode, putting the manufactured electrode assembly in a cylindrical battery case or a prismatic battery shape, and then injecting an electrolytic solution. Alternatively, the battery may be manufactured by stacking the electrode assembly, impregnating the electrode assembly in the electrolytic solution, and putting and sealing the obtained resultant in a battery case.

For the battery case used in the present invention, those commonly used in the field may be adopted, and there is no limitation in the appearance according to the use of the battery. For example, a cylindrical type using a can, a prismatic type, a pouch type, or a coin type, etc., may be used.

The lithium secondary battery according to the present invention may be used not only in a battery cell used as a power source for a small device, but also may be preferably used as a unit cell in a medium or large battery module including a plurality of battery cells. Preferred examples of the medium-large device include, but are not limited to, an electric vehicle, a hybrid electric vehicle, a plug-in hybrid electric vehicle, a system for power storage, etc.

Hereinafter, the present invention will be described in detail by way of examples, but these are for describing the present invention in more detail, and the scope of the present invention is not limited by the following examples.

**Preparation Example**

(Preparation Example 1) Preparation of first anode slurry

First anode slurry having a viscosity of 6,000 cps was prepared by adding an anode active material using artificial graphite alone, a conductive material, a CMC thickener, and an SBR binder to water in a weight ratio of 95:1.0:1.2:2.8.

(Preparation Example 2) Preparation of second anode slurry

Second anode slurry having a viscosity of 6,000 cps was prepared by adding an anode active material using artificial graphite alone, a conductive material, a CMC thickener, and an SBR binder to water in a weight ratio of 97.6:1.0:1.2:0.2.

(Preparation Example 3) Preparation of third anode slurry

Third anode slurry having a viscosity of 6,000 cps was prepared by adding an anode active material using artificial graphite alone, a conductive material, a CMC thickener, and an SBR binder to water in a weight ratio of 96.3:1.0:1.2:1.5.

**Examples**

(Example 1)

10.6 mg/cm$^2$ of the prepared first and second anode slurries were applied to one surface of a copper current collector (copper foil with a thickness of 6 $\mu$m) through a slot die coater. In this case, a binder pattern coating core [FIG. 1A] was applied as illustrated in [FIG. 2B], and an application ratio of the first and second slurries was applied at 5:5. A coating speed was 8 m/min and the drying was performed at a drying temperature of 130°C in an oven.

By rolling the dried anode (rolling density: 1.68 g/cm$^3$), an anode with a current collector anode active material layer was manufactured.

In this case, in the prepared anode, a composition of a solid content of the anode active material layer was 96.3 wt% of the anode active material, 1.0 wt% of the conductive material, 1.5 wt% of the SBR binder, and 1.2 wt% of the CMC thickener. In addition, the prepared anode was formed with the copper foil thickness of 6 $\mu$m and the anode active material layer thickness of 132 $\mu$m, and a boundary between the binder layer and the anode active material layer was not clearly distinguished on an SEM image, and it was confirmed that the prepared anode was formed of one anode active material layer.

A slurry was prepared by mixing $Li[Ni_{0.88}Co_{0.1}Mn_{0.02}]O_2$ as a cathode active material, carbon black as a conductive material, and polyvinylidene fluoride (PVDF) as a binder in a weight ratio of 96.5:2:1.5. The slurry was uniformly applied to an aluminum foil having a thickness of 12 $\mu$m, and vacuum-dried to manufacture a cathode for a secondary battery.

The cathode and anode were each stacked by notching to a predetermined size, and an electrode cell was formed by interposing a separator (polyethylene, thickness 13 $\mu$m) between the cathode and the anode, and then tab portions of the cathode and the anode were welded, respectively. The assembly of the welded cathode/separator/anode was put in a pouch, and three sides were sealed except for the electrolyte injection side. In this case, the part with the electrode tab was included in a sealing part. An electrolytic solution was injected through the remaining surfaces except for the sealing part, and the remaining surfaces were sealed and then impregnated for 12 hours or more. As the electrolytic solution, after 1M $LiPF_6$ is dissolved in a mixed solvent of EC/EMC/DEC (25/45/30; volume ratio), those to which 1 wt% of vinylene carbonate (VC), 0.5 wt% of 1,3-propensultone (PRS), and 0.5 wt% of lithium bis(oxalato)borate (LiBOB) are added were used.

Thereafter, pre-charging was performed for 36 minutes with a current corresponding to 0.25C. After degassing is performed after 1 hour and aging is performed for more than 24 hours, chemical charge and discharge were performed (charging condition CC-CV 0.2C 4.2V 0.05C CUT-OFF, discharging condition CC 0.2C 2.5V CUTOFF). Thereafter, standard charging and discharging was performed (charging condition CC-CV 0.33C 4.2V 0.05C CUT-OFF, discharging condition CC 0.33C 2.5V CUT-OFF) to manufacture a secondary battery.

(Comparative Example 1)

The prepared third anode slurry was applied to one surface of the copper current collector (copper foil with a thickness of 6 $\mu$m) through the slot die. As the coating core of the slot die, a general coating core with an open discharging part was used (the form in which all the non-discharging parts of the slurry was changed to the discharging part in the upper and lower layers of FIG. 1B). Except for this, the anode, the cathode, and the secondary battery were manufactured in the same manner as in Example 1.

(Comparative Example 2)

The prepared first and second anode slurries were applied to one surface of the copper current collector (copper foil with a thickness of 6 $\mu$m through the slot die by a multi-layer simultaneous die coating method. As the coating core of the slot die, a general coating core with an open discharging part was used (the form in which all the non-discharging parts of the slurry was changed to the discharging part in the upper and lower layers of FIG. 1B). Except for this, the anode, the cathode, and the secondary battery were manufactured in the same manner as in Example 1.

**Evaluation Example**

[Evaluation Example 1]: SBR distribution analysis through SEM-EDS analysis

In order to evaluate the binder contents for each anode location in Examples and Comparative Examples, the binder contents of the first layers (current collector surface, a1, b1) and the second layers (electrode surface, a2, b2) was analyzed through the SEM-EDS analysis, and the binder content in the width direction a and b was analyzed through TGA analysis.

[Table 1]

| | | Binder ratio (wt%) | | Binder distribution in width direction | Binder distribution in thickness direction | |
|---|---|---|---|---|---|---|
| | | a | b | a/b | a1/a2 | b1/b2 |
| Comparative Example 1 | Second layers | 1.5 | 1.5 | 1.0 | 0.67 | 0.67 |
| | First layers | 1.0 | 1.0 | | | |
| Comparative Example 2 | Second layers | 1.0 | 1.0 | 1.0 | 2.0 | 2.0 |
| | First layers | 2.0 | 2.0 | | | |
| Example 1 | Second layers | 1.0 | 1.0 | 1.4 | 2.5 | 1.5 |
| | First layers | 2.5 | 1.5 | | | |

(In Table 1, each numerical value of the binder distribution in the width direction and the thickness direction is a weight ratio)

In Example 1, it was confirmed that a binder concentration gradient occurred in both the width direction and the thickness direction as the coating method of the present invention was applied. On the other hand, in the case of Comparative Example 1, as the binder particles moved to the surface of the anode active material layer in the slurry drying process applied during the manufacturing of the anode, it is analyzed that the binder gradient in the thickness direction occurred, and the binder gradient is constant without the binder concentration gradient in the width direction. In addition, in the case of Comparative Example 2, a simultaneous die coating (dual coating) method was used, but the binder concentration gradient in the width direction was not implemented.

[Evaluation Example 2]: Comparison of performance verification after manufacturing of electrode cell

The adhesion of the anodes manufacturing in Example 1 and Comparative Examples 1 and 2 and the resistance of the secondary battery were analyzed, and the results are shown in Table 2 below.

(Evaluation of Electrode Adhesion)

For the prepared anode, the electrode adhesion was measured by an adhesion measuring device (IMADA Z Link 3.1 was used to measure the force when the electrode was attached to the tape and then peeled off at an angle of 90°) .

(Evaluation of Interface Resistance)

For the prepared anode, the interface resistance between the anode and the current collector was measured using an interfacial specific resistance value meter (XF057 from Hioki Co.) from Hioki Co.

(Cell Resistance Evaluation)

The DC resistance of the manufactured secondary battery is calculated from a difference in current and voltage when different currents are applied. After the secondary battery is rested for 30 minutes in the state of charge SOC 50, the voltage measurement result is V0, and then a value of constant current discharged for 10 seconds is calculated as V1, so the DC resistance was calculated using Ohm's law $\Delta R = \Delta V (V1 - V0)/\Delta I$.

[Table 2]

| | Evaluation of anode | | Evaluation of secondary battery |
|---|---|---|---|
| | Electrode adhesion (N) | Interfacial resistance ($\Omega cm^2$) | DC-IR (m$\Omega$) |
| Comparative Example 1 | 0.21 | 0.052 | 1.481 |
| Comparative Example 2 | 0.34 | 0.044 | 1.342 |

(continued)

|  | Evaluation of anode | | Evaluation of secondary battery |
|---|---|---|---|
|  | Electrode adhesion (N) | Interfacial resistance ($\Omega cm^2$) | DC-IR (m$\Omega$) |
| Example 1 | 0.33 | 0.028 | 1.207 |

Since the binder content of the anode of Example 1 was higher at the interface between the current collector and the electrode active material layer compared to the electrode surface, the interfacial adhesion with the current collector was improved as a whole in the electrode active material layer compared to Comparative Example 1. In addition, since the binder content of the anode in the width direction is different, the penetration of Li-ions into the electrode is facilitated, and the intercalation rate of the ion conductivity may be increased due to the lateral diffusion after the penetration, so it could be confirmed that the cell resistance of the secondary battery is significantly improved compared to Comparative Example 2.

According to the present invention, it is possible to improve an interfacial adhesion between a current collector and an electrode active material layer, improve process defects such as electrode detachment, and improve rapid charging performance.

In addition, according to the present invention, it is possible to improve an electrode interface resistance without increasing a binder content and increasing a conductive material by optimizing a composition of the binder in the electrode.

Although the exemplary embodiments of the present invention have been described above, the present invention is not limited to the above exemplary embodiments, but may be manufactured in a variety of different forms, and those of ordinary skill in the art to which the present invention pertains will understand that the present invention may be implemented in other specific forms without changing the technical spirit or essential features of the present invention. Therefore, it should be understood that the above-described exemplary embodiments are exemplary in all aspects but are not limited thereto.

**Claims**

1. An electrode for a secondary battery, comprising:

    a current collector; and
    an electrode active material layer including an electrode active material and a binder located on at least one surface of the current collector,
    wherein the electrode active material layer includes A region and B region crossing in a direction from one side to the other side of the electrode active material layer in a width direction,
    the A region has a higher binder content than that of the B region, and
    the A region and B region have a continuous binder content gradient at a boundary of each region.

2. The electrode of claim 1, wherein the following relational expression 1 is satisfied:

$$[Relational\ Expression\ 1]$$

$$1.0 < A/B < 2.5$$

    in the relational expression 1, A is a binder content in the A region, and B is a binder content in the B region.

3. The electrode of claim 1, wherein the electrode active material layer has a ratio $B_L/B_H$ of a binder content $B_L$ at a point at which a thickness is 20% to a binder content $B_H$ at a point at which the thickness is 80% which ranges from 1.5 to 3.5 in a direction from a surface of the current collector to a surface of the electrode based on a thickness direction.

4. The electrode of claim 1, wherein the A region and B region of the electrode active material layer each include first layers $a_1$ and $b_1$ and second layers $a_2$ and $b_2$ in the direction from the surface of the current collector to the surface of the electrode, based on the thickness direction,

the first layers have a higher binder content than that of the second layers, and
the first layers and the second layers have a continuous binder content at a boundary of each layer.

5. The electrode of claim 4, wherein the following relational expression 2 is satisfied:

$$[Relational \; Expression \; 2]$$

$$2.0 < A_1/A_2 < 3.0 \; and \; 1.0 < B_1/B_2 < 2.5$$

in relational expression 2, $A_1$ and $A_2$ each are the binder contents of the first layers and the second layers in the A region, and $B_1$ and $B_2$ each are the binder contents of the first layers and the second layers in the B region.

6. The electrode of claim 1, wherein the binder includes a styrene butadiene rubber (SBR)-based binder.

7. The electrode of claim 1, wherein the electrode active material layer includes 0.1 to 2 wt% of the binder based on the total weight.

8. A method of manufacturing an electrode for a secondary battery, comprising:

   a) applying first and second electrode slurries to at least one surface of a current collector; and
   b) drying the applied first and second electrode slurries;
   wherein in step a), the first and second electrode slurries are cross-applied, but the first and second electrode slurries are simultaneously applied, in a direction from one side to the other side of the current collector based on a width direction of the current collector, and
   the first electrode slurry has a binder content higher than that of the second electrode slurry.

9. The method of claim 8, wherein in step a), the first electrode slurry is applied from a location close to a surface of the current collector, and the second electrode slurry is applied from a location far from the surface of the current collector, based on the thickness direction of the current collector.

10. The method of claim 8, wherein the first and second electrode slurries each independently include an electrode active material and a binder, and
    the first electrode slurry includes 1 to 5 wt% of the binder based on a solid content, and the second electrode slurry includes 0.1 to 1 wt% of the binder based on the solid content.

11. The method of claim 8, wherein step b) is performed at a temperature of 50 to 200°C for 30 to 300 seconds.

12. A secondary battery comprising the electrode of any one of claims 1 to 7.

【FIG. 1A】

[UPPER LAYER]          [LOWER LAYER]

【FIG. 1B】

SLURRY NON-DISCHARGING PART

[UPPER LAYER]

[LOWER LAYER]

SLURRY DISCHARGING PART

【FIG. 2A】

COMPARATIVE EXAMPLE 1

UPPER LAYER

LOWER LAYER

Foil

EXAMPLE 1

UPPER LAYER

LOWER LAYER

Foil

【FIG. 2B】

COMPARATIVE EXAMPLE 1

ELECTRODE SURFACE

ELECTRODE INTERFACE

Foil

● SBR PARTICLE

EXAMPLE 1

Foil

Europäisches
Patentamt
European
Patent Office
Office européen
des brevets

# EUROPEAN SEARCH REPORT

Application Number

EP 22 20 2771

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br>A | WO 2021/075773 A1 (LG CHEMICAL LTD [KR])<br>22 April 2021 (2021-04-22)<br>* paragraphs [0055], [0063], [0085] –<br>[0089], [0103] – [0107]; figure 2;<br>example 4 * | 1-4,6,8,<br>9,12<br>7,10,11<br>5 | INV.<br>H01M4/04<br>H01M4/139<br>H01M4/36<br>H01M4/62 |
| X | US 2006/185154 A1 (SAITO TAKAMITSU [JP] ET<br>AL) 24 August 2006 (2006-08-24)<br>* paragraphs [0109] – [0112], [0119] –<br>[0120], [0123]; figure 9; example 1 * | 1,8,12 | ADD.<br>H01M4/02 |
| Y | US 2020/295360 A1 (BAE JUHYE [KR] ET AL)<br>17 September 2020 (2020-09-17)<br>* paragraphs [0115] – [0120]; figure 1A * | 7,10 | |
| Y | KR 2021 0014716 A (SK INNOVATION CO LTD<br>[KR]) 9 February 2021 (2021-02-09)<br>* paragraphs [0049] – [0053] * | 11 | |
| A | US 2011/045253 A1 (NIELSEN CHRISTIAN S<br>[US] ET AL) 24 February 2011 (2011-02-24)<br>* paragraphs [0069], [0089] – [0092];<br>figure 5 * | 1-12 | TECHNICAL FIELDS<br>SEARCHED (IPC)<br><br>H01M |
| A | US 2018/337396 A1 (KIM HYUK-SU [KR])<br>22 November 2018 (2018-11-22)<br>* paragraphs [0089] – [0092]; figure 2b * | 1-12 | |

The present search report has been drawn up for all claims

| Place of search | Date of completion of the search | Examiner |
|---|---|---|
| Munich | 3 March 2023 | Letilly, Marika |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 20 2771

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2023

| Patent document cited in search report | | Publication date | Patent family member(s) | | Publication date |
|---|---|---|---|---|---|
| WO 2021075773 | A1 | 22-04-2021 | CN | 113039667 A | 25-06-2021 |
| | | | EP | 3855533 A1 | 28-07-2021 |
| | | | JP | 2022524671 A | 10-05-2022 |
| | | | KR | 20210044503 A | 23-04-2021 |
| | | | US | 2021399278 A1 | 23-12-2021 |
| | | | WO | 2021075773 A1 | 22-04-2021 |
| US 2006185154 | A1 | 24-08-2006 | CN | 1784799 A | 07-06-2006 |
| | | | EP | 1634345 A2 | 15-03-2006 |
| | | | JP | 4207678 B2 | 14-01-2009 |
| | | | JP | 2005011657 A | 13-01-2005 |
| | | | KR | 20060029619 A | 06-04-2006 |
| | | | US | 2006185154 A1 | 24-08-2006 |
| | | | WO | 2004114441 A2 | 29-12-2004 |
| US 2020295360 | A1 | 17-09-2020 | CN | 111697197 A | 22-09-2020 |
| | | | KR | 20200109764 A | 23-09-2020 |
| | | | US | 2020295360 A1 | 17-09-2020 |
| KR 20210014716 | A | 09-02-2021 | JP | 2021535537 A | 16-12-2021 |
| | | | KR | 20210014716 A | 09-02-2021 |
| | | | US | 2022131151 A1 | 28-04-2022 |
| | | | US | 2022131152 A1 | 28-04-2022 |
| | | | WO | 2020046026 A1 | 05-03-2020 |
| US 2011045253 | A1 | 24-02-2011 | CN | 101849303 A | 29-09-2010 |
| | | | EP | 2208246 A2 | 21-07-2010 |
| | | | JP | 2010539651 A | 16-12-2010 |
| | | | KR | 20100057659 A | 31-05-2010 |
| | | | US | 2011045253 A1 | 24-02-2011 |
| | | | WO | 2009035488 A2 | 19-03-2009 |
| US 2018337396 | A1 | 22-11-2018 | CN | 108352502 A | 31-07-2018 |
| | | | EP | 3349274 A1 | 18-07-2018 |
| | | | JP | 7058838 B2 | 25-04-2022 |
| | | | JP | 2018537839 A | 20-12-2018 |
| | | | KR | 20170107921 A | 26-09-2017 |
| | | | PL | 3349274 T3 | 31-03-2020 |
| | | | US | 2018337396 A1 | 22-11-2018 |
| | | | WO | 2017160085 A1 | 21-09-2017 |

EPO FORM P0459

For more details about this annex : see Official Journal of the European Patent Office, No. 12/82